# EUROPEAN PATENT APPLICATION

(11) **EP 2 660 500 A1**
(43) Date of publication of application: **06.11.2013**
(21) Application number: 13165948.4
(22) Date of filing: 30.04.2013
(51) Int. Cl.: F16L 55/165

(54) **Tubular liner for renovating a district heating pipe and a corresponding method of renovating a district heating pipe**

(30) Priority: 01.05.2012 EP 12166307
(71) Applicant: Per Aarsleff A/S, 8230 Åbyhøj (DK)
(72) Inventor: Jensen, Svend Erik, 8370 Hadsten (DK); Larsen, Anna Amalie, 7800 Skive (DK); Christensen, Anne Sofie Holm, 8362 Hørning (DK)
(74) Representative: Nielsen, Henrik Sten

(57) **Abstract**

The present invention relates to a tubular liner assembly for renovating a district heating pipe, said liner assembly comprising a first tubular layer of felt material and a second tubular layer of felt material located adjacent said first tubular layer of felt material, said first and second tubular layers of felt material being impregnated by a curable and high temperature resistant resin, said first tubular layer of felt material including a reinforcing web of fibre material, said second tubular layer comprising a high temperature resistant coating, said high temperature resistant coating facing away from said first tubular layer, said high temperature resistant coating being capable of withstanding degradation from heat and/or hydrolysis when exposed to district heating water having a temperature of 130-170 °C, such as 150 °C.

## Description

The present invention relates to a tubular liner for renovating a district heating pipe and a corresponding method of renovating a district heating pipe.

### BACKGROUND

District heating networks are used in many cities and communities for transporting heat from a centralised heat generation plant to residential and commercial users. The heat may be used for e.g. heating living space or tap water. The heat is transported in the form of district heating water via district heating pipes which operate at high temperatures up to 150 °C and pressures up to 16 bar, occasional even 25 bar. Substations induing heat exchangers may be used for varying the temperature between e.g. 70-150 °C. The district heating water typically remains in liquid phase, however, networks in which the district heating water is provided in gaseous phase, i.e. steam, are also known. The district heating pipes are typically made of metal such as steel in order to withstand the high temperatures and pressures. The district heating pipes are thermally insulated in order to minimise the thermal losses during transportation. The thermal losses in the network are typically below 10%.

The high temperature and pressures used in the district heating pipes may degrade the pipes over time, in particular due to corrosion and hydrolysis. Small holes and voids may appear which will cause the district heating water to leak to the outside, thus increasing the thermal losses in the network. Since the district heating pipes are typically subterranean, the exchange of the pipes will involve high costs. It is therefore a need for systems and methods for trench less renovation of district heating pipes.

Trenchless renovation of various pipes has been intensively investigated in the prior art. In US 2012/0006465 a shape part made of a polyamide shaped component is used as a liner for a conduit. The liner may be introduced into a transport line, such as a district heating line, for the renovation of the line. However, no specific temperatures have been mentioned.

EP 1 023 352 discloses a high service temperature polyurethane elastomeric which may be used as insulation for district heating. Service temperatures of 140-155°C are mentioned as typical.

EP 1 657 483 relates to a method of optimising the efficiency of a district heating system. The method involves introducing an inner solid pipe into an outer pipe.

EP 0 588 051 relates to a method of introducing a corrugated metal hose into a district heating pipe.

US 2008/0185065 discloses a multilayer plastic pipe. The pipe may be used for district heating.

DE 10 2008 001 678 discloses a polyamide substance for covering a pipeline. The pipeline may be a district heating pipeline.

WO 97/42444 discloses a need coating material which may be used to rehabilitate the inside of pipelines.

EP 0 897 509 relates to a high-temperature-resistant coating of district heating pipeline material using a zementious material.

US 2010/0084037 relates to a method for high-temperature-resistant coating of a district heating pipe using a polymeric material.

EP 1 125 082 discloses a tubing for lining fluid pipes for natural gas having a pressure of at least 16 bar.

US 2005/0028881 A1 relates to a reinforced liner for cured in place pipe rehabilitation of an existing pipeline having reinforcing fibers which may be secured to a porous scrim to form an inner tubular reinforcing layer. An outer layer of bundles of reinforcing fiber are formed into a tube about the absorbent layer. The reinforcing layers may include longitudinal reinforcing fiber to increase the longitudinal strength of the liner.

WO 2005/047756 A1 relates to a resin-impregnated cured in place liner with an integral inner impermeable layer. The liner is formed from a resin impregnable material having an impermeable layer bonded to one surface. The impregnated liner is then suitable for pull-in-and-inflate which can be by steam in view of the integral inner impermeable layer of the liner.

Renovation of district heating pipes has also been discussed in the publication "Rehabilitation of district heating networks" by Andrew Caswell of Wavin Plastics Limited. The document describes the relining of secondary pipes which may experience temperatures up to 90°C, i.e. much lower temperatures than the temperatures experienced in the main pipe, which temperatures may exceed 150°C.

### SUMMARY OF THE INVENTION

In the present context it would be an advantage to be able to use a heat-curable and high-temperature-resistant resin in combination with reinforcing fibres in order to allow the liner to be easy to handle and install in the defect district heating pipeline.

In the technical field of trenchless renovation or rehabilitation of sewer pipelines, which is described in e.g. WO 2008/101499, the technique of rehabilitating an underground pipe by introducing a lining tube impregnated by means of a resin into the pipe and causing the lining tube to be contacted to the inner surface of the pipe by applying pressure to the inside of the lining tube and at the same time applying heat to the lining tube for curing the resin and consequently solidifying the lining tube has been refined for many years. The technique of rehabilitating pipes by introducing a lining tube into the pipe and solidifying the pipe by curing the resin included in the lining tube has been carried out in accordance with two alternative techniques, the one including the simple technique of pulling the lining tube into the pipe to be renovated and forcing the lining tube outwardly into contact with the inner surface of the pipe and a different technique involving the so-called inversion of the lining tube as the lining tube is turned inside out as water or preferably pressurised air is used to force the lining tube in the inversion process into the pipe and afterwards solidifying the lining tube by introducing hot water or steam into the lining tube for causing the resin to cure.

Sewer pipelines do not have to withstand the pressure and temperature which apply to district heating pipes. Liners which are intended for carrying water in the form of sewage and other low temperature applications have proven to be insufficient in connection with the renovation of district heating pipes, in particular the main lines which experience both high pressures and temperatures. Although the above-mentioned liners have the advantage of being fibre-reinforced and thereby capable of, when cured, to withstand high pressures, the hot water in the district heating pipelines tend to interact with the reinforcing fibres and resins in a hydrolysis process and thus the liners tend to degrade very quickly. It is thus an object of the present invention to provide systems and methods for renovating district heating.

The above object, the above advantage, and the above need together with numerous other objects, advantages, and needs, which will be evident from the below detailed description of the present invention, are in accordance with a first aspect of the present invention obtained by a tubular liner assembly for renovating a district heating pipe, the liner assembly comprising a first tubular layer of felt material and a second tubular layer of felt material located adjacent the first tubular layer of felt material, the first and second tubular layers of felt material being impregnated by a curable and high-temperature-resistant resin, the first tubular layer of felt material including a reinforcing layer of fibre material, the second tubular layer comprising a high-temperature-resistant coating, the high-temperature-resistant coating facing away from the first tubular layer, the high-temperature-resistant coating being capable of withstanding degradation from heat and/or hydrolysis when exposed to district heating water having a temperature of 110-150 °C, such as 140 °C.

It is understood that the liner is tubular when inserted into the district heating pipeline. The district heating pipeline typically comprises an inner pipeline of metal, such as stainless steel, and an outer pipeline of insulating material. The diameter of the tubular liner should correspond to the inner diameter of the district heating pipe. The liner is assembled in a flat state, i.e. the first tubular layer and the second tubular layer are provided in the form of felt sheets having an appropriate length and width. The tubular shape is formed such that the high-temperature-resistant coating of the second tubular layer will face the interior of the pipeline once the liner assembly is installed in the pipeline. The tubular shape is formed by folding and stitching the liner assembly together such that the first tubular layer and the second tubular layer form a coaxial relationship with respect of each other. A cover tape is applied over the stitching in order to ensure that the liner will be fluid tight. Subsequently, the liner assembly is impregnated by allowing the felt material of the first and second tubular layer to be soaked with resin. The resin may be a Bisphenol-based resin which is capable of withstanding high temperatures without degrading. High temperature should in the present context be understood to mean 110-150 °C, which is the typical maximum temperature of the district heating water.

The resin should preferably be a heat-curable and high-temperature-resistant resin. After impregnation, the liner assembly is flexible and may be folded in order to be transported to the installation site in an easy and efficient manner. When the liner has been installed, it may be cured by hot water or steam in order for the curable and high-temperature-resistant resin to solidify and form a solid liner. The temperature needed for curing is typically slightly lower than the maximum operating temperature of the cured resin, thus about 110-150 °C. The reinforcing layer of fibre material will in the installed liner be located having the felt layer inbetween itself and the existing district heating pipe and allow small holes etc up to e.g. 5mm diameter to be covered. The liner assembly together with the existing district heating pipe should be capable of withstanding at least 16 bar which is the highest typical operating pressure and preferably at least 25 bar which is the typical test pressure for district heating pipes. The reinforcing layer will not be in contact with the district heating water since it is covered by the second tubular layer which is facing the interior of the installed liner assembly. The reinforcing fibres will thus be protected from any degradation by hydrolysis of the hot district heating water.

The high-temperature-resistant coating of the second tubular layer should be facing the interior of the installed liner assembly and will thus be in contact with the district heating water flowing through the installed liner assembly within the district heating pipe. The high-temperature-resistant coating is applied onto the second tubular layer and is thus not in contact with the reinforcing fibres but may be in contact with the resin. The high-temperature-resistant coating may be any liquid tight material which is not degraded by the heat applied to it by the district heating water, i.e. the high-temperature-resistant coating should remain solid when exposed to the district heating water having the temperature of 110-150°C. Further, the high-temperature-resistant coating should not degrade due to hydrolysis from the exposure by the district heating water. Hydrolysis is understood to be the process in which certain materials, in particular polymers, are broken down in a chemical reaction between the material in question and the water. The high temperature of the water will accelerate the degradation. Suitable material for the high-temperature-resistant coating may be found in the class of the thermoplastic materials, among which many fulfill the above-mentioned criterion of withstanding degradation from heat and/or hydrolysis when exposed to district heating water. The high-temperature-resistant coating should be thin in order to not compromise the flexible nature of the liner assembly.

The tubular liner assembly according to the present invention may be applied to damaged district heating pipes or non-damaged district heating pipes in order to prevent corrosion and extend the lifetime of the district heating pipe.

According to a further embodiment according to the first aspect of the present invention, the high-temperature-resistant coating is capable of withstanding degradation from heat and/or hydrolysis when exposed to district heating water having a pressure of 1-25 bar, preferably between 1-16 bar, more preferably between 5-16 bar, such as 15-16 bar. Typical district heating pipes operate at pressures of maximum 16 bar. However, for testing purposes, higher pressures may be used, such as 25 bar. In order to be able to withstand the pressures of up to 16 bar or even 25 bar, a reinforced layer must be used. The liner assembly, when cured, should be able to withstand the applied pressure at the location of a failure or hole, It is contemplated that the liner assembly should be able to withstand holes having a size up to 5 mm in diameter at the above-mentioned pressures. Thus, the liner assembly itself must not necessarily withstand the above-mentioned pressure over its whole length but only in conjunction with the existing district heating pipe.

According to a further embodiment according to the first aspect of the present invention, the tubular liner assembly further comprises a third layer of felt material including a further reinforcing layer of fibre material and located between the first layer and the second tubular layer. In order to achieve an increased structural stability, a sandwich structure may be used. The sandwich structures comprise a third layer of corresponding to the first tubular layer.

According to a further embodiment according to the first aspect of the present invention, the first and second tubular layers constitute a first and a second needle punch felt, respectively, preferably each of the first and second needle punch felt having a thickness of between 2 and 3 mm, such as 2.5 mm, the first and second needle punch felt preferably being made of mineral fibres, such as glass fibres, or organic fibres, such as polypropylene fibres. Needle punch felt is preferred due to its flexibility and ability to hold resin. The thickness of the first and second tubular layer of between 2-3 mm is suitable for most standard sized district heating pipes. The properties of the third and fourth layers, if present, correspond to the second and first tubular layers, respectively.

According to a further embodiment according to the first aspect, the reinforcing layer comprises a glass fibre-reinforcing layer. Glass fibres are preferred for most applications.

According to a further embodiment according to the first aspect, the reinforcing layer has a mass per square meter of 100-3000 grams / m² , preferably 300-1000 grams / m², more preferably between 400-600 grams / m2, most preferably 500 grams / m². The above amounts of reinforcing fibres will be sufficient for allowing the liner, when cured, to withstand the above-mentioned pressures of 16 bar or even 25 bar.

According to a further embodiment according to the first aspect of the present invention, 5-50%, preferably 10-20%, more preferably 15-25%, of the reinforcing layer include fibres which are oriented in a longitudinal direction with respect to the tubular liner assembly and 50-95%, preferably 70-90%, more preferably 75-85% of the reinforcing layer comprise chopped glass fibres having a fibre length of 50-1000 mm, preferably 100-600 mm, more preferably 300-400 mm, which fibres are oriented in a random direction, preferably a transversal direction with respect to said tubular liner assembly. The fibres which are oriented in the longitudinal direction, i.e. axial direction, will reinforce the liner assembly with respect to longitudinal forces such as the forces applied when the liner is installed in the district heating pipe. The transversally oriented fibres, i.e. peripherally oriented fibres, will reinforce the liner assembly with respect to transversal forces, i.e. outwardly oriented forces which apply to the liner due to the pressure of the district heating water.

According to a further embodiment according to the first aspect of the present invention, the curable and high-temperature-resistant resin comprises a synthetic resin such as epoxy. Preferably a heat-curable and high-temperature-resistant resin is used such as epoxy. By using epoxy or any similar synthetic resin, it may be ensured that the liner assembly before curing will have a sufficient flexibility for being installed and adjusted inside the district heating pipe. After curing, the liner will assume a hardened state. The curing may be performed by the use of hot water or preferably steam.

According to a further embodiment according to the first aspect of the present invention, the curable and high-temperature-resistant resin having a softening temperature of above 140 °C, and/or, having a pot life of at least 15-24 hours at 23 °C and/or a pot life of at least 5 days at 5 °C and/or a flexibility when cured of at least 3% before rupturing. The cured resin should be able to withstand the high temperatures of the district heating water, e.g. 140°C, without being softened. In case the cured liner softens, it may possibly bulge or leak. The pot life of the uncured resin should be at least 5 days when cooled to 5 °C in order to allow the resin to be transported from the impregnation plant to the installation site. The pot life at an average ambient temperature of 23 °C should be 15-24 hours to allow the liner to be properly installed and adjusted without the need of external cooling. The flexibility of 3% is desired in order for the cured liner assembly to be able to adapt to voids within the district heating pipe without rupturing.

According to a further embodiment according to the first aspect of the present invention, the high-temperature-resistant coating constitutes a thermoplastic foil applied onto the second tubular layer, preferably by means of extrusion. As mentioned above, the high-temperature-resistant coating may be of thermoplastic material. The thermoplastic material may be provided as a foil which is extruded onto the second tubular layer.

According to a further embodiment according to the first aspect, the high-temperature-resistant coating has a thickness corresponding to 500-1000 grams / m². The above values are appropriate in order to completely cover the second tubular layer and prevent any degradation of the underlying layer of reinforcing fibres.

The above object, the above advantage, and the above need together with numerous other objects, advantages, and needs which will be evident from the below detailed description of the present invention are in accordance with a second aspect of the present invention obtained by a method of renovating a district heating pipe, the method comprising the steps of:
providing a tubular liner assembly for renovating a district heating pipe, the liner assembly comprising a first tubular layer of felt material and a second tubular layer of felt material located adjacent the first tubular layer of felt material, the first and second tubular layers of felt material being impregnated by a curable and high-temperature-resistant resin, the first tubular layer of felt material including a reinforcing layer of fibre material, the second tubular layer comprising a high-temperature-resistant coating, the high-temperature-resistant coating facing away from the first tubular layer, the high-temperature-resistant coating being capable of withstanding degradation from heat and/or hydrolysis when exposed to district heating water having a temperature of 110-150 °C, such as 140 °C, the first tubular layer initially facing inwardly and the second tubular layer including the high-temperature-resistant coating initially facing outwardly,
inverting the tubular liner assembly into the district heating pipe such that the first tubular layer is facing outwardly and the second tubular layer including the high-temperature-resistant coating is facing inwardly,
fixating the tubular liner assembly within the district heating pipe, and
curing the curable and high-temperature-resistant resin.

The provided tubular liner and the district heating pipe according to the second aspect of the present invention may correspond to the tubular liner and the district heating pipe as described above in connection with the first aspect of the present invention. The tubular liner assembly is inserted into the district heating pipe in an uncured condition and is subsequently cured typically by the application of heat or infrared radiation in order to form a solid liner which is fixated within the district heating pipe. The liner should be oriented such that the second tubular layer including the high-temperature-resistant coating is facing inwardly and the fist layer including the reinforcing fibre layer should be facing outwardly and preferably contacting the district heating pipe. The cured liner is subsequently cooled, cut into a proper shape and sealed. It is evident from the above that the specified embodiment according to the first aspect is equally applicable with respect to the second aspect.

The technique of inverting the liner into the district heating pipe involves the so-called inversion of the tubular liner assembly as the tubular liner assembly, which is closed at the end, is turned inside out as fluid, such as water or pressurised air, is used to force the lining tube in the inversion process into the district heating pipe Before inversion, the second tubular layer should be facing outwardly and the first tubular layer inwardly so that after inversion the second tubular layer is facing inwardly and the first tubular layer is facing outwardly. Alternatively, in some specific occasions it may be preferred to simply pull the tubular liner assembly into the district heating pipe to be renovated and force the lining tube outwardly into contact with the inner surface of the pipe by means of ropes or wires. It is evident that the pulling technique in general is less preferred due to the added complexity of ropes etc and when using the pulling technique, the second tubular layer should be facing inwardly and the first tubular layer outwardly at all times.

According to a further embodiment according to the second aspect of the present invention, the step of inverting the tubular liner assembly into the district heating pipe is performed by introducing fluid, preferably liquid water or pressurised gas such as air into the assembly. Before curing, the liner may be adjusted and subsequently fixated. When it has been ensured that the tubular liner assembly has assumed the proper position, the tubular liner assembly is solidified by introducing hot water, or steam into the tubular liner assembly for causing the resin to cure.

According to a further embodiment according to the second aspect of the present invention, the curable and high-temperature-resistant resin is heat-curable and the step of curing the curable and high-temperature-resistant resin is performed by introducing hot water or steam into the tubular liner assembly. The temperature of the steam and water should preferably be comparable to the maximum temperature of the district heating water, i.e. 110-150°C. Preferably, a two step curing process is used in which water of approximately 100°C is introduced into the tubular liner assembly and subsequently steam is introduced into the tubular liner assembly in order to reach temperatures above 100°C.

According to a further embodiment according to the second aspect of the present invention, the method further comprises the step of post-curing the curable and high-temperature-resistant resin by pulling an infrared radiation curing device through the tubular liner assembly, thereby exposing the tubular liner assembly to radiation, preferably infrared radiation. In case water is used for the curing, a maximum temperature of 100°C may be achieved. Typically, higher temperatures are needed for reaching a complete solidification of the resin. As discussed above, steam may be used in order to achieve higher temperatures. In addition or instead of steam, an infrared radiation curing device may be used in order to finalise the curing process.

In some cases, the tubular liner assembly may not be fully cured during the installation since the heat must always pass from the interior of the liner assembly through the second tubular layer outwardly and may not be able to have fully penetrated the first tubular layer of the tubular liner assembly. The provision of the high-temperature-resistant coating may further prevent the heat from reaching all of the resin of the first tubular layer. Thus, uncured resin may still be present in the first tubular layer adjacent the district heating pipe. This may even be desirable in some cases since there may be a need for smaller adjustments of the tubular liner assembly immediately after the installation. Thus, in order to fully cure the liner at the locations distant from the high-temperature-resistant coating, i.e. adjacent the district heating pipe, an infrared radiation curing device, such as the apparatus for curing a liner of a pipeline as described in WO 2008/101499, may be used. The infrared radiation curing device has the advantage that the emitted infrared radiation rays will penetrate the high-temperature-resistant coating and the second tubular layer such that the first tubular layer will be cured.

### BRIEF DESCRIPTION OF THE DRAWINGS

Fig 1 is a perspective view and a cross sectional view of a tubular liner assembly according to the present invention.
Fig 2 is a sequence describing the installation of a tubular liner assembly into a district heating pipe using water.
Fig 3 is a sequence describing the installation of a tubular liner assembly into a district heating pipe using pressurised fluid, such as air.

### DETAILED DESCRIPTION OF THE DRAWINGS

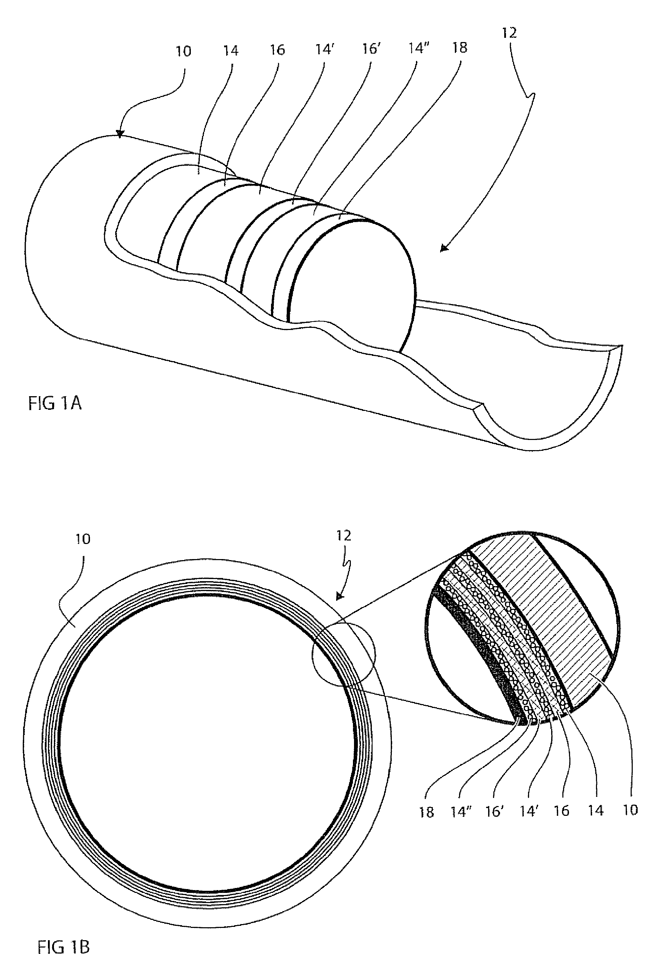

Fig 1A shows a perspective view of a district heating pipe 10 including a tubular liner assembly 12. The tubular liner assembly 12 comprises a first tubular layer located adjacent the wall of the district heating pipe 10. The first tubular layer comprises a needle punch felt layer 14 of mineral fibres, primarily glass fibres, of about 2-3mm thickness. The first tubular layer has glass fibre reinforcing layer 16. The reinforcing layer 16 has about 50-200 gram/m² of longitudinal fibres, i.e. fibres oriented in the axial direction, and about 300-1000 gram/m² of transversal fibres, i.e. fibres oriented in the peripheral direction. The transversal fibres are preferably chopped glass fibres of a length of 100-600 mm.

The present embodiment includes an optional additional tubular layer is located adjacent and in a co-axial relationship with the first tubular layer opposite the district heating pipe 10. The additional tubular layer is identical to the first tubular layer and comprises a further needle punch felt layer 14' and a further glass fibre reinforcing layer 16' similar to the first tubular layer. The provision of multiple identical layers is optional and will contribute to the structural stability of the finished liner by providing a sandwich structure.

The needle punch felt of the first tubular layer and the additional tubular layer are impregnated by a curable high-temperature-resistant epoxy resin. The epoxy resin should have a softening temperature of over 140°C. The pot life should be at least 15-24 hours at 23°C and 5 days at 4°C. The flexibility of the cured resin should be at least 3% before rupture. The cured resin should be high-temperature-resistant to at least 110-150°C.

The innermost layer comprise a yet further felt layer 14" having a thermoplastic coating 18 applied onto its inwardly facing surface. The coating 18 may be applied by extrusion onto the needle punch felt layer 14", The coating 18 is made of a modified thermoplastic which is high-temperature-resistant, i.e. it does not degrade thermally or by hydrolysis at temperatures below 150°C. The coating is applied at 500.1000 grams/m²

Fig 1B shows a sectional view of the district heating pipe 10 including a tubular liner assembly 12 as shown in fig 1A. Further, a close-up view of the district heating pipe 10 provides a more detailed view of the different layers of the tubular liner assembly 12, including the first layer including the felt layer 14 and glass fibre reinforced layer 16, the additional layer including the further felt layer 14' and further glass fibre reinforced layer 16' and the second layer including the yet further felt layer 14" having the thermoplastic coating 18.

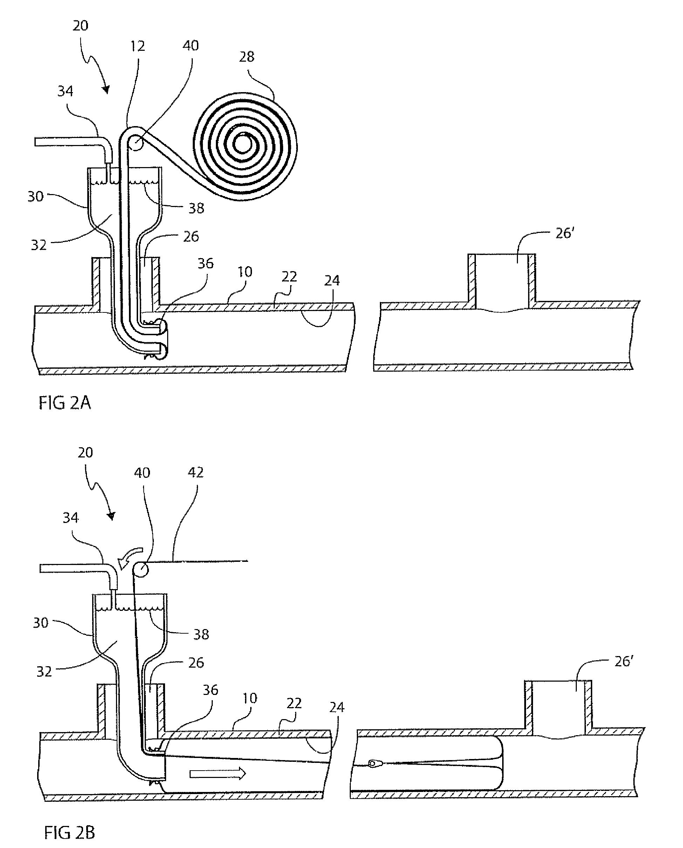

Fig 2A shows the step of preparing a tubular liner assembly 12 for insertion into a district heating pipe 10 using the inversion method by means of a lining device 20. The district heating pipe 10 comprises a thick insulation layer 22 of e.g. polyurethane foam. The interior 24 of the pipe comprises a watertight material typically stainless steel. The district heating pipe 10 may have voids in the form of small holes which may be the result from e.g. corrosion, however, even a new and non damaged district heating pipe 10 may be relined as described below in order to prevent corrosion of the pipe interior 24 in the future.

The present district heating pipe 10 is accessible via a man hole 26. The tubular liner assembly 12 is provided in a flat shape in the form of a roll 28. It is evident that the non-inverted liner assembly 12 of the roll 28 has the layers in an opposite arrangement compared to the installed liner assembly 10 described in connections with fig 1A. The lining device 20 comprises a water reservoir 30 for providing the driving pressure for installing the tubular liner assembly 12 into the district heating pipe 20. The water 32 is provided by a tap 34.

Fig 2B shows the step of inserting the tubular liner assembly 12 into the district heating pipe 10 using the inversion method by means of the lining device 20. The inversion process is clearly shown by one end 36 of the tubular liner assembly 12 being fastened to the lining device 20 which is directed towards the district heating pipe 10. The end 36 of the tubular liner assembly 12 is located below the water level 38 of the water reservoir 30. By holding an appropriate water level 32 in the water reservoir 28, water is forced into the tubular liner assembly 12 which in turn is forced into the district heating pipe 20. The tubular liner assembly 12 is constantly fed from the roll 28 and guided by roller 40.

The liner assembly 12 is inverted upon entry into the district heating pipe 10 and pressed against the pipe interior 24. In this way the pipe interior 24 may be covered and the tubular liner assembly 12 fixated against the pipe interior 24. The liner assembly 10 may be adjusted during the insertion, since the high-temperature-resistant resin within the tubular liner assembly 12 has not yet solidified or cured. The water 32 used may be cold, e.g. below 20°C in arder to avoid initiation of the curing prematurely. A rope 42 may be fastened to the end of the tubular liner assembly 12 in order to be able to control the velocity of the tubular liner assembly 12 when more than half of the tubular liner assembly 12 has entered the district heating pipe 10.

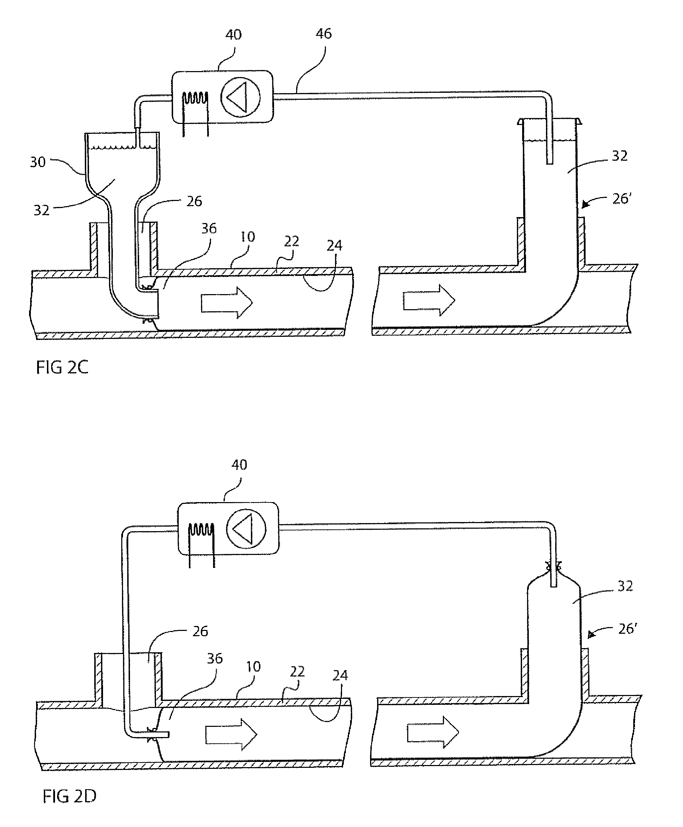

Fig 2C shows the curing step of the liner assembly 10 within the district heating pipe 10. The liner assembly 10 has now reached the opposite man hole 26'. A boiler 44 is used for heating the water 29 in the liner assembly 10 to the curing temperature of up to 100°C in order to solidify the high-temperature-resistant resin of the liner assembly 12 and thereby fixate the liner assembly 12 to the interior 24 of the district heating pipe 10. The boiler 44 includes a circulation pump and a water hose 46 in order to circulate and heat the water 32 as shown by the arrows.

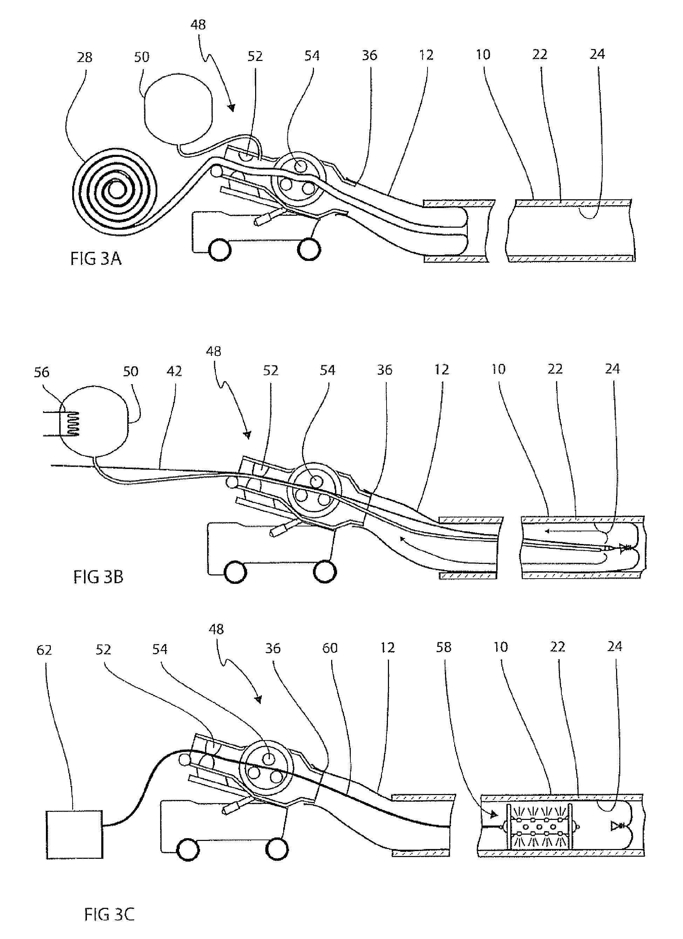

Fig 2D shows an optional fourth step post-curing the tubular liner assembly 12. Once the liner assembly 10 has been fixated, steam may be led into the tubular liner assembly 12 in order to reach temperatures above 100°C which may be necessary in order to cure high-temperature-resistant resins. Alternatively, an infrared radiation curing device as described in fig 3C may be used.

Fig 3A shows the step of inserting a tubular liner assembly 12 into a district heating pipe 10 using the inversion method by means of an air robot 48. The district heating pipe 10 comprises a thick insulation layer 22 of e.g. polyurethane foam. The interior 24 of the pipe comprises a watertight material typically stainless steel. The district heating pipe 10 may have voids in the form of small holes which may be the result from e.g. corrosion, however, even a new and non damaged district heating pipe 10 may be relined as described below in order to prevent corrosion of the pipe interior 24 in the future.

The district heating pipes 10 are typically underground and accessible via a man hole, however, the district heating pipes 10 may be provided in an underground tunnel or yet alternatively above ground. The tubular liner assembly 12 is provided in a flat shape in the form of a roll 28. It is evident that the non-inverted liner assembly 12 of the roll 28 has the layers in an opposite arrangement compared to the installed liner described in connection with fig 1A. The air robot 48 further comprises a compressed air reservoir 50 for providing the pressure for installing the tubular liner assembly 12 into the district heating pipe 10. The inversion process is clearly shown by one end 36 of the tubular liner assembly 12 being fastened to the air robot 20' at the end of the air robot 50' which is directed towards the entrance of the district heating pipe 10. By supplying compressed air from the reservoir 50 into the interior of the air robot 48, air is forced into the tubular liner assembly 12 which in turn is forced into the district heating pipe 10. The air cannot escape the opposite direction of the air robot 48 due to the provision of oppositely oriented rubber seals 52. The tubular liner assembly 12 is constantly fed from the roll 28 and guided within the air robot 20' by rollers 54.

The liner assembly 12 is inverted upon entry into the district heating pipe 10 and pressed against the pipe interior 24. In this way, the pipe interior 24 may be covered. The liner assembly 10 may be adjusted during the insertion before the high temperature resin of the tubular liner assembly 12 has been cured or solidified.

Fig 3B shows the curing step of the tubular liner assembly 12 within the district heating pipe 10. Steam may be provided by the air robot 48 and directed into the tubular liner assembly 12 in order for the tubular liner assembly 12 to cure and solidify.

Fig 3C shows an optional step of post-curing the liner assembly 12. Once the liner assembly 12 has been cured by steam or water, an infrared radiation curing device 58 may be inserted into the district heating pipe 10. The infrared radiation curing device 58 emits infrared radiation outwardly and may thus cause any remaining resin not yet cured, such as resin located close to the pipe interior 24, to cure. The infrared radiation curing device 58 comprises infrared radiation diodes which are powered by a power source 62 via an electrical cord 60. The infrared radiation device 58 may be pushed into the district heating pipe 10 by means of compressed air. It should be noted that the post curing by means of the infrared radiation curing device 58 may also follow a water curing as shown in connection with figs 2.

**List of parts with reference to the figures**

| |
|---|
| 10. District heating pipe |
| 12. Tubular liner assembly |
| 14. Felt layer |
| 14' Further felt layer |
| 14" Yet further felt layer |
| 16. Glass fibre reinforced layer |
| 16' Further glass fibre reinforced layer |
| 18. Thermoplastic coating |
| 20. Lining device |
| 22. Insulation |
| 24. Pipe interior |
| 26. Man hole |
| 28. Roll |
| 30. Water reservoir |
| 32. Water |
| 34. Tap |
| 36. Liner end |
| 38. Water level |
| 40. Roller |
| 42. Rope |
| 44. Boiler |
| 46. Water hose |
| 48. Air robot |
| 50. Compressed air reservoir |
| 52. Seals |
| 54. Rollers |
| 56. Heater |
| 58. Infrared radiation device |
| 60. Electrical cord |
| 62. Power source |

## Claims

1. A tubular liner assembly (12) for renovating a district heating pipe (10), said liner assembly comprising a first tubular layer (14) of felt material and a second tubular layer (14') of felt material located adjacent said first tubular layer (14) of felt material, said first (14) and second (14') tubular layer s of felt material being impregnated by a curable and high-temperature-resistant resin, said first tubular layer (14) of felt material including a reinforcing layer (16) of fibre material, said second tubular layer (14') comprising a high-temperature-resistant coating (18), said high-temperature-resistant coating (18) facing away from said first tubular layer (14), said high-temperature-resistant coating (18) being capable of withstanding degradation from heat and/or hydrolysis when exposed to district heating water having a temperature of 110-150 °C, such as 140 °C, wherein 5-50% of said reinforcing layer (16) include fibres which are oriented in a longitudinal direction with respect to said tubular liner assembly (12) and 50-95% of said reinforcing layer (16) comprise chopped glass fibres having a fibre length of 50-1000 mm, which fibres are oriented in a random direction.

2. The tubular liner assembly (12) according to claim 1, wherein the high-temperature-resistant coating (18) being capable of withstanding degradation from heat and/or hydrolysis when exposed to district heating water having a pressure of 1-25 bar, preferably between 1-16 bar, more preferably between 5-16 bar, such as 15-16 bar.

3. The tubular liner assembly (12) according to any of the preceding claims, wherein said tubular liner assembly (12) further comprises comprises a third layer (14") of felt material including a further reinforcing layer (16') of fibre material and located between the first layer (14) and the second tubular layer (14').

4. The tubular liner assembly (12) according to any of the preceding claims, wherein said first (14) and second (14') tubular layers constitute a first and a second needle punch felt, respectively, preferably each of said first and second needle punch felt having a thickness of between 2 and 3 mm, such as 2.5 mm, said first and second needle punch felt preferably being made of mineral fibres, such as glass fibres, or organic fibres, such as polypropylene fibres.

5. The tubular liner assembly (12) according to any of the preceding claims, wherein said reinforcing layer (16) comprises a glass fibre-reinforcing layer.

6. The tubular liner assembly (12) according to any of the preceding claims, wherein said reinforcing layer (16) having a mass per square meter of 100-3000 grams / m² preferably 300-1000 grams / m², more preferably between 400-600 grams / m², most preferably 500 grams / m².

7. The tubular liner assembly (12) according to any of the preceding claims, wherein 10-20%, more preferably 15-25%, of said reinforcing layer (12) include fibres which are oriented in a longitudinal direction with respect to said tubular liner assembly (12) and 70-90%, more preferably 75-85% of said reinforcing layer (16) comprise chopped glass fibres having a fibre length of 100-600 mm, more preferably 300-400 mm, which fibres are oriented in a random direction, preferably a transversal direction with respect to said tubular liner assembly (12).

8. The tubular liner assembly (12) according to any of the preceding claims, wherein said curable and high-temperature-resistant resin comprises a synthetic resin such as epoxy.

9. The tubular liner assembly (12) according to any of the preceding claims, wherein said curable and high-temperature-resistant resin has a softening temperature of above 140 °C, and/or, having a pot life of at least 15-24 hours at 23 °C and/or a pot life of at least 5 days at 5 °C and/or a flexibility when cured of at least 3% before ruptureing.

10. The tubular liner assembly (12) according to any of the preceding claims, wherein said high-temperature-resistant coating (18) constitutes a thermoplastic foil applied onto said second tubular layer (14'), preferably by means of extrusion.

11. The tubular liner assembly (12) according to any of the preceding claims, wherein said high-temperature-resistant coating (18) has a thickness corresponding to 500-1000 grams / m².

12. A method of renovating a district heating pipe (10), said method comprising the steps of:
providing a tubular liner assembly (12) for renovating a district heating pipe (10), said liner assembly comprising a first tubular layer (14) of felt material and a second tubular layer (14') of felt material located adjacent said first tubular layer (14) of felt material, said first (14) and second (14') tubular layers of felt material being impregnated by a curable and high-temperature-resistant resin, said first tubular layer (14) of felt material including a reinforcing layer (16) of fibre material, said second tubular layer (14') comprising a high-temperature-resistant coating (18), said high-temperature-resistant coating (18) facing away from said first tubular layer (14), said high-temperature-resistant coating (18) being capable of withstanding degradation from heat and/or hydrolysis when exposed to district heating water having a temperature of 110-150 °C, such as 140 °C, said first tubular layer (14) initially facing inwardly and said second tubular layer (14') including said high-temperature-resistant coating (18) initially facing outwardly, wherein 5-50% of said reinforcing layer (16) include fibres which are oriented in a longitudinal direction with respect to said tubular liner assembly (12) and 50-95% of said reinforcing layer (16) comprise chopped glass fibres having a fibre length of 50-1000 mm, which fibres are oriented in a random direction,
inverting said tubular liner assembly (12) into said district heating pipe (10) such that said first tubular layer (14) is facing outwardly and said second tubular layer (14') including said high-temperature-resistant coating (18) is facing inwardly,
fixating said tubular liner assembly (12) within said district heating pipe (10), and
curing said curable and high-temperature-resistant resin.

13. The method according to claim 12, wherein the step of inverting said tubular liner assembly (12) into said district heating pipe (10) is performed by introducing liquid water or compressed gas such as air into said assembly.

14. The method according to any of the claims 12-13, wherein said curable and high-temperature-resistant resin is heat-curable and the step of curing said curable and high-temperature-resistant resin is performed by introducing hot water or steam into said tubular liner assembly (12).

15. The method according to any of the claims 12-14, wherein said method further comprises the step of post-curing said curable and high-temperature-resistant resin by pulling an infrared radiation coring device (58) through said tubular liner assembly (12) thereby exposing said tubular liner assembly (12) to radiation, preferably infrared radiation.
